# DEMANDE DE BREVET EUROPEEN

(11) **EP 1 156 683 A1**
(43) Date de publication de la demande: **21.11.2001**
(21) Numéro de dépôt: 01400751.2
(22) Date de dépôt: 22.03.2001
(51) Int. Cl.: H04Q 7/22, G06F 17/30

(54) **Système d'accès à des informations stockées dans une base de données**

(30) Priorité: 15.05.2000 FR 0006160
(71) Demandeur: Peugeot Citroen Automobiles SA, 92200 Neuilly sur Seine (FR)
(72) Inventeur: Lemerle, Stéphane, 75013 Paris (FR)
(74) Mandataire: Habasque, Etienne Joel Jean-François

(57) **Abrégé**

Ce système d'accès à des informations stockées dans une base de données (2) permet l'accès à partir d'au moins un terminal d'accès fixe (12) et d'au moins un terminal d'accès (16) embarqué à bord d'un véhicule automobile.

La base de données comprend deux serveurs de données (4,6) synchronisés et raccordés entre eux par des moyens de mise à jour mutuelle (8), un premier serveur (4) contenant les informations selon un premier format permettant l'échange d'informations via un réseau (10) de type Internet avec le terminal fixe (12) et un second serveur (6) contenant les informations selon un second format permettant l'échange d'informations avec le terminal embarqué (16) à travers un réseau de télécommunication sans fil (18), au moyen d'une passerelle de raccordement (20) de ce second serveur (6) avec le réseau de télécommunication sans fil (18).

## Description

La présente invention concerne un système d'accès à des informations stockées dans une base de données à partir d'au moins un terminal d'accès fixe et d'au moins un terminal d'accès embarqué à bord d'un véhicule automobile.

Les développements en matière de systèmes informatiques permettent aujourd'hui d'avoir accès à de multiples informations à partir de différentes sources.

Cependant, les possibilités d'accéder à ces informations à partir de points d'accès de natures différentes restent limitées. C'est en particulier le cas lorsque l'on souhaite pouvoir accéder à celles-ci, non seulement à partir d'un terminal d'accès fixe, mais également à partir d'un terminal d'accès embarqué à bord d'un véhicule automobile.

L'invention vise donc à remédier à ces inconvénients en proposant un système adapté pour l'échange d'informations entre une base de données et au moins un terminal d'accès fixe et un terminal d'accès embarqué à bord d'un véhicule automobile.

Elle a pour objet un système d'accès à des informations stockées dans une base de données du type précité, caractérisé en ce que la base de données comprend deux serveurs de données synchronisés et raccordés entre eux par des moyens de mise à jour mutuelle, un premier serveur contenant les informations selon un premier format permettant l'échange d'informations via un réseau de type Internet avec le terminal fixe et un second serveur contenant les informations selon un second format permettant l'échange d'informations avec le terminal embarqué à travers un réseau de télécommunication sans fil, au moyen d'une passerelle de raccordement de ce second serveur avec le réseau de télécommunication sans fil.

Le système d'accès à des informations stockées dans une base de données selon l'invention peut en outre comporter une ou plusieurs des caractéristiques suivantes :
- le premier serveur contient les informations stockées selon le format HTML et le second serveur contient les informations stockées selon le format WML du standard WAP, l'échange d'informations avec le terminal embarqué utilise le standard WAP et le terminal d'accès embarqué (16) comporte un logiciel de navigation WAP ;
- le terminal d'accès embarqué comprend des moyens de stockage de données adaptés pour le stockage d'une partie des informations de la base de données ;
- le terminal embarqué comporte un module de positionnement géographique par satellite ;
- le terminal embarqué comporte un système de navigation du véhicule ;
- le terminal embarqué comporte des moyens de connexion vers un calculateur central du véhicule ;
- la base de données comporte au moins un répertoire électronique contenant au moins une carte de visite associée à un correspondant ;
- la base de données comporte des moyens de contrôle d'accès adaptés pour autoriser la consultation du répertoire électronique par au plus un accès à partir d'un terminal fixe et un accès à partir d'un terminal embarqué ;
- les moyens de contrôle d'accès sont adaptés pour autoriser la création, la modification et/ou la suppression d'un répertoire électronique par au plus un accès à partir d'un terminal fixe ou embarqué ;
- la carte de visite comporte une zone réservée à l'enregistrement d'une adresse postale et de coordonnées de positionnement géographique par satellite correspondant à cette adresse postale ;
- la carte de visite comporte des zones réservées à l'enregistrement de numéros de téléphone et/ou de fax, d'adresses électroniques, d'un texte, de types définissant le type de chaque numéro de téléphone ;
- une carte de visite de chaque répertoire est libellée au nom du constructeur du véhicule dans lequel est embarqué le terminal d'accès correspondant et comporte un numéro de téléphone correspondant à un centre de diagnostic du fonctionnement du véhicule, avec lequel le terminal embarqué peut échanger des informations de diagnostic;
- le numéro de téléphone est du type GSM et les informations de diagnostic se présentent sous la forme de messages courts de type SMS ;
- le réseau de télécommunication sans fil est du type GSM 900 ;
- le réseau de télécommunication sans fil est du type DCS 1800 ;
- le réseau de télécommunication sans fil est du type GPRS ; et
- le réseau de télécommunication sans fil est du type UMTS.

L'invention sera mieux comprise à la lecture de la description qui va suivre, donnée uniquement à titre d'exemple et faite en se référant aux dessins annexés, sur lesquels :
- la Fig.1 est un schéma synoptique illustrant la structure générale d'un système d'accès à des informations stockées dans une base de données, selon l'invention ;
- la Fig.2 représente un schéma synoptique illustrant la structure générale d'un terminal d'accès embarqué à bord d'un véhicule automobile, entrant dans la constitution de ce système;
- la Fig.3 représente une page d'accès à la base de données du système selon l'invention, selon le format HTML ;
- la Fig.4 représente une page de présentation d'une carte de visite du système selon l'invention, selon le format HTML ;
- la Fig.5 représente une première page de présentation d'une carte de visite du système selon l'invention, selon le format WML ;
- la Fig.6 représente une deuxième page de présentation de la carte de visite représentée à la figure 5 ;
- la Fig.7 représente une troisième page de présentation de la carte de visite représentée à la figure 5 ;
- la Fig.8 représente une quatrième page de présentation de la carte de visite représentée à la figure 5 ;
- la Fig.9 représente une cinquième page de présentation de la carte de visite représentée à la figure 5 ;
- la Fig.10 représente une sixième page de présentation de la carte de visite représentée à la figure 5 ; et
- la Fig.11 représente une septième page de présentation de la carte de visite représentée à la figure 5.

Dans la description suivante, on va décrire un exemple de réalisation d'un système selon l'invention qui permet d'avoir accès à des informations relatives à des cartes de visites constituant des répertoires électroniques et associées à différents correspondants.

Il va de soi bien entendu que d'autres applications de ce système peuvent être envisagées.

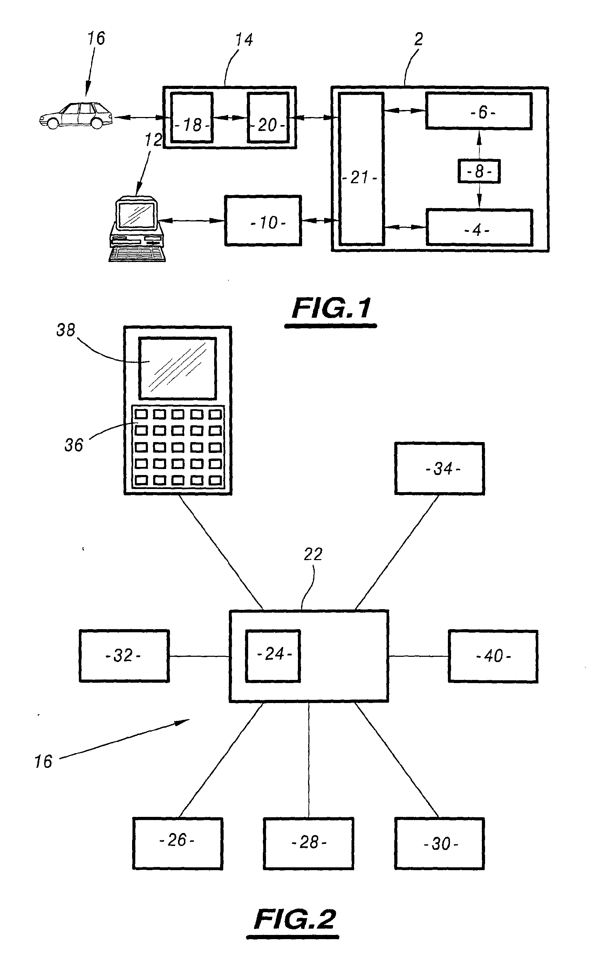

Le système d'accès représenté à la figure 1, comporte une base de données 2 stockant des informations de type répertoires électroniques contenant chacun des cartes de visite, par exemple au format VCard.

Ces informations sont stockées d'une part dans un premier serveur Internet 4 de la base de données 2, sous forme de pages de présentation selon le format HTML classique, et d'autre part dans un second serveur WAP 6 de cette base, sous forme de pages de présentation selon le format WML.

Les deux serveurs 4 et 6 sont synchronisés et raccordés entre eux par des moyens de mise à jour mutuelle 8 de type classique. Ces moyens de mise à jour mutuelle permettent à chaque instant la mise à jour automatique de l'un des deux serveurs en fonction des modifications enregistrées sur l'autre, et réciproquement, de sorte que les informations stockées sur l'un et l'autre serveurs sont identiques à chaque instant bien que stockées selon des formats différents.

Le serveur Internet 4 est connecté au réseau Internet 10 et est ainsi accessible par un utilisateur au moyen d'un terminal d'accès fixe 12 de type classique. Pour pouvoir accéder aux données stockées sur le serveur Internet 4, le terminal fixe 12 comporte un logiciel de navigation sur Internet, de type classique.

Le serveur WAP 6 est connecté à des moyens de connexion WAP 14 et est accessible par un utilisateur au moyen d'un terminal d'accès 16 embarqué à bord d'un véhicule automobile.

Les moyens de connexion WAP 14 comprennent un réseau de télécommunication sans fil 18 du type GSM 900 par exemple et une passerelle 20 de raccordement de celui-ci avec le serveur WAP 6.

Ainsi, le système permet l'échange d'informations avec le terminal d'accès fixe 12 selon le protocole de communication IP et avec le terminal d'accès embarqué 16 selon le protocole de communication WAP.

De façon classique, un superviseur d'accès 21 est associé à la base de données. Il est interposé entre le serveur Internet 4 et le réseau Internet 10 d'une part, et entre le serveur WAP 6 et les moyens de connexion WAP 14, d'autre part.

Le terminal d'accès embarqué 16 est représenté plus en détail à la figure 2 et comporte un logiciel de navigation WAP 32 de type classique.

Comme cela est illustré, ce terminal 16 comprend une unité centrale 22, comportant des moyens de stockage de données 24. Ce terminal embarqué comprend également, raccordés à l'unité centrale 22, un module de communication GSM 26, un module GPS 28 de positionnement géographique par satellite selon le standard GPS classique, un système de navigation du véhicule 30, le logiciel de navigation WAP 32, un synthétiseur vocal 34, un clavier alphanumérique 36 et un écran 38.

Ce terminal est également connecté à un calculateur central 40 du véhicule, de gestion du fonctionnement de celui-ci.

Le système dont la structure a été décrite précédemment permet d'offrir par exemple un service de répertoires électroniques. Un tel répertoire électronique est constitué par exemple d'un ensemble de cartes de visite et est accessible par un utilisateur identifié.

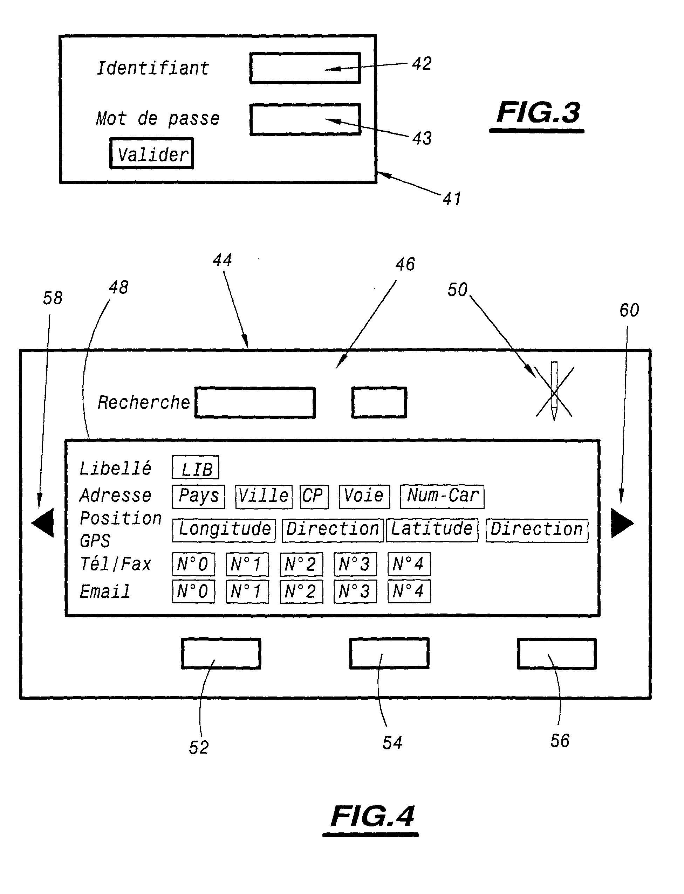

L'accès à la base de données 2 à partir du terminal fixe 12 se fait par une page de présentation 41 selon le format HTML, représentée à la figure 3. Un utilisateur inscrit d'une part un identifiant dans une première partie 42 de cette page, prévue à cet effet, et d'autre part un mot de passe personnel et connu de lui seul dans une seconde partie 43 de cette page, prévue à cet effet.

Par validation de ces données, il accède à une nouvelle page selon le format HTML, lui donnant accès à la première carte de visite électronique du répertoire électronique stocké dans la base de données 2, à son nom.

Une page de présentation 44 de carte de visite, selon le format HTML est représentée à la figure 4. Sur cette page, une partie supérieure 46 comporte des moyens de recherche d'une carte de visite par mot clé, de type classique.

Une partie centrale 48 comporte tous les attributs d'une carte de visite.

Si la carte de visite en cours de présentation est également en cours de modification sur le serveur WAP 6, l'utilisateur en est averti par un icone 50 dédié.

La carte de visite en cours de présentation comporte les attributs suivants :
- un libellé sous forme d'une chaîne de caractères, dont la valeur par défaut est une chaîne de caractères vide;
- une adresse postale, sous forme d'une structure de données dont la première donnée est une chaîne de caractères dont la valeur par défaut est une chaîne de caractères vide, indiquant un pays, la deuxième donnée est une chaîne de caractères dont la valeur par défaut est une chaîne de caractères vide, indiquant une ville, la troisième donnée est une chaîne de caractères, dont la valeur par défaut est une chaîne de caractères vide, indiquant un code postal, la quatrième donnée est une chaîne de caractères, dont la valeur par défaut est une chaîne de caractères vide, indiquant le nom d'une voie et la cinquième donnée est une chaîne de caractères dont la valeur par défaut est une chaîne de caractères vide, indiquant un numéro de voie ou un nom de voie sécante ;
- des informations de positionnement géographique par satellite, sous la forme d'une structure de données, dont la première donnée est une longitude exprimée en degrés, minutes, secondes et centièmes de seconde, de valeur nulle par défaut, associée à une direction « Est » ou « Ouest », de valeur par défaut « Est » et dont la seconde donnée est une latitude exprimée en degrés, minutes, secondes et centièmes de seconde, de valeur nulle par défaut, associée à une direction « Nord » ou « Sud », de la valeur par défaut « Nord » ;
- un ensemble de par exemple cinq numéros de téléphone ou de fax, sous la forme d'une structure de données, dont chaque donnée est un nombre, de valeur par défaut nulle, chacun des cinq nombres étant associé à un type parmi « cellulaire », « domicile », « professionnel », « fax », « autre» ; et
- un ensemble de par exemple cinq adresses électroniques sous forme d'une structure de données, chaque donnée étant sous forme d'une chaîne de caractères, dont la valeur par défaut est une chaîne de caractères vide, chaque adresse électronique étant de plus associée à un type parmi « cellulaire », « domicile », « professionnel », « autre 1 », « autre 2 ».

On notera que le serveur Internet 4 est capable de calculer automatiquement les informations de positionnement géographique par satellite si une adresse postale correcte est déjà saisie.

Deux attributs supplémentaires, non renseignés par l'utilisateur et non visibles sur cette page de présentation, sont automatiquement enregistrés par le système. Il s'agit du dernier numéro de téléphone ou de fax et de la dernière adresse électronique consultés. S'il n'y en a pas, ces attributs sont mis à leur valeur par défaut.

Dans la partie inférieure de la page de présentation 44 représentée, une première touche virtuelle 52 de validation permet de valider une modification d'au moins une partie des attributs d'une carte de visite, décrits précédemment, lorsque l'icone 50 n'est pas activé.

Une deuxième touche virtuelle 54 permet, de façon classique, l'ajout et la sauvegarde d'une nouvelle carte de visite dans le répertoire.

Enfin, une troisième touche virtuelle 56 de suppression, permet de supprimer la carte de visite en cours de présentation, lorsque l'icone 50 n'est pas activé.

Dans la partie gauche de la page de présentation 44, une flèche virtuelle 58 orientée vers la gauche permet un défilement en arrière dans la liste des cartes de visite du répertoire électronique.

De même, dans la partie droite de la page de présentation 44, une flèche virtuelle 60 dirigée vers la droite permet un défilement en avant dans la liste des cartes de visite du répertoire électronique.

Pour qu'une carte de visite électronique puisse être validée, au moyen de la touche virtuelle 52, il faut qu'au moins l'attribut « libellé » soit renseigné.

L'accès à la base de données 2 à partir du terminal embarqué 16 se fait quant à lui directement sans aucun identifiant ni mot de passe, l'identification étant directement réalisée sur présentation du numéro de téléphone du terminal embarqué, passé en paramètre dans la demande d'accès à la base de données 2.

L'utilisateur accède ainsi à une première page de présentation d'une carte de visite du répertoire électronique stocké dans la base de données 2 sur le serveur WAP 6 et correspondant au numéro de téléphone du terminal embarqué.

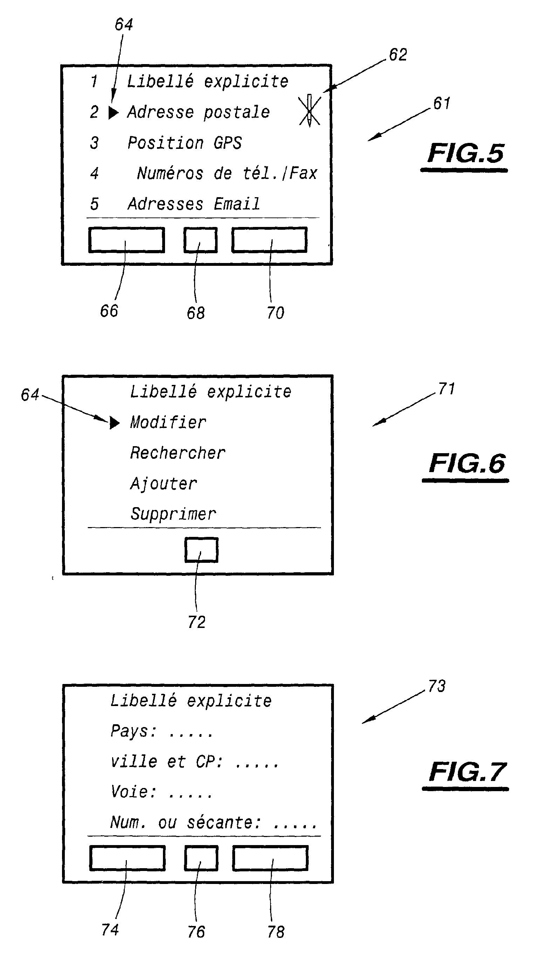

Cette première page de présentation est représentée à la figure 5 et est désignée par la référence 61. Il s'agit par exemple, lors de la connexion, de la première carte de visite du répertoire.

De même que décrit précédemment, si la carte de visite en cours de présentation est également en cours de modification sur le serveur Internet 4, l'utilisateur en est averti par un icone 62 ou un texte.

Cette première page de présentation 61 d'une carte de visite, comporte par exemple cinq titres. Le premier est le libellé de la carte de visite sous forme d'une chaîne de caractères, le deuxième est « adresse postale », le troisième « position GPS », le quatrième « numéros de téléphone ou fax », le cinquième « adresses Email ».

Dans la partie inférieure de la page de présentation, une première touche virtuelle de sauvegarde 66, permet de sauvegarder la carte de visite en cours de présentation, dans les moyens de stockage 24 de l'unité centrale 22 de ce terminal d'accès embarqué 16.

L'utilisateur peut sélectionner l'un des titres, parmi les deuxième, troisième, quatrième et cinquième titres, grâce au positionnement d'un curseur 64 devant ce titre.

Une touche virtuelle de validation 68 permet de sélectionner l'attribut désigné par le titre devant lequel est disposé le curseur 64.

Une troisième touche virtuelle de manipulation 70 permet d'accéder à une deuxième page de présentation de la carte de visite.

Cette deuxième page de présentation est représentée à la figure 6 et est désignée par la référence générale 71. Elle comporte cinq titres. Le premier est, comme décrit précédemment, le libellé explicite de la carte de visite. Le deuxième titre, « modifier », permet à l'utilisateur de modifier la carte de visite en cours de présentation, tous les attributs apparaissant à l'écran avec possibilité de modification. Le troisième titre « rechercher » permet une recherche par l'utilisateur d'une carte de visite dans le répertoire électronique, par mot clé sur le libellé. Le quatrième titre, « ajouter », permet la création par l'utilisateur d'une nouvelle carte de visite dans le répertoire électronique. Le cinquième titre, « supprimer », permet la suppression par l'utilisateur, du serveur WAP 6 et donc de la base de données 2, de la carte de visite en cours de présentation. Une touche virtuelle de sélection 72 permet la sélection du titre devant lequel est disposé le curseur 64, à l'exception du premier titre qui n'est pas sélectionnable.

Une activation de la touche virtuelle de validation 68 de la première page de présentation telle que représentée à la figure 5, permet d'accéder à une troisième page de présentation de la carte de visite, représentée à la figure 7, lorsque le titre « adresse postale » est sélectionné par le curseur 64.

Cette troisième page de présentation est désignée par la référence générale 73 sur cette figure 7 et comporte le libellé explicite de la carte de visite, suivi d'une adresse postale, dont la structure est similaire à celle présentée à la figure 4.

Sur une partie inférieure de cette page de présentation 73, une première touche virtuelle de guidage 74 permet à l'utilisateur d'envoyer une requête de guidage vers le système de navigation du véhicule 30 avec pour adresse de destination, celle enregistrée dans la carte de visite, affichée sur la page de présentation 73. Le point de départ est donné par la position courante du véhicule. Le module GPS 28 permet alors de façon classique de suivre le parcours indiqué et le synthétiseur vocal 34 permet de délivrer les consignes à l'utilisateur.

Une deuxième touche virtuelle de sélection 76 permet de revenir à la page de présentation précédente. Une troisième touche virtuelle de manipulation 78 permet d'accéder à une quatrième page de présentation de la carte de visite.

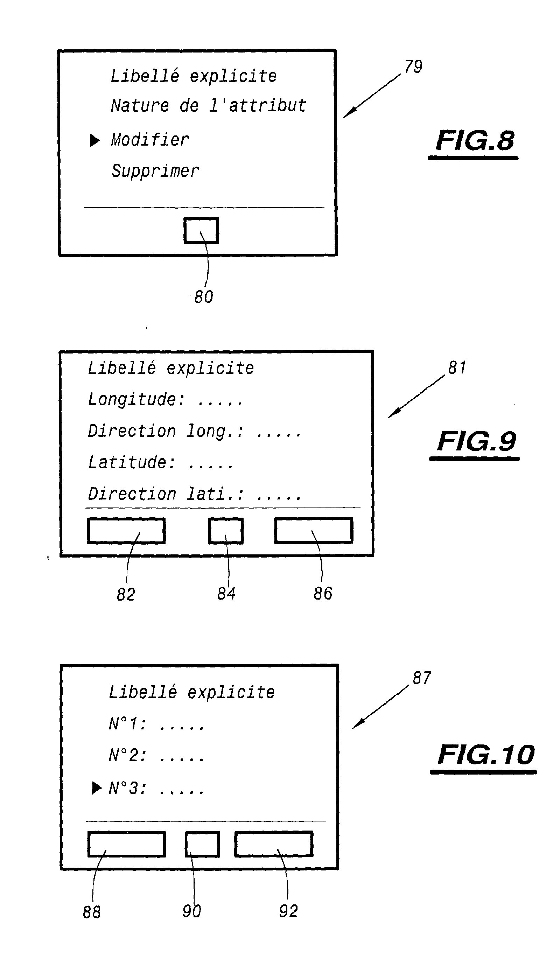

Cette quatrième page de présentation est représentée à la figure 8 et est désignée par la référence générale 79. Elle comporte quatre titres dont le premier est le libellé explicite de la carte de visite.

Le deuxième titre reprend le titre de l'attribut que l'on souhaite modifier. Il s'agit de "adresse postale", si l'on arrive à cette page de présentation à partir de la page de présentation 73 ; de l'un des titres de la page de présentation 61, si l'on y arrive à partir de celle-ci ; de "position GPS", si l'on y arrive à partir de la page de présentation 81, qui sera décrite ultérieurement ; de "numéro de téléphone ou fax", si l'on y arrive à partir de la page de présentation 87 qui sera décrite ultérieurement ; de "adresse Email", si l'on y arrive à partir de la page de présentation 93 qui sera décrite ultérieurement.

Le troisième titre « modifier » peut être sélectionné et permet alors de modifier l'attribut sélectionné pour être modifié.

Le quatrième titre « supprimer » peut être sélectionné et permet alors de supprimer toutes les informations sur l'attribut.

De même que décrit précédemment, une touche virtuelle de sélection 80 permet de valider les opérations « modifier » et « supprimer », puis de revenir à la page de présentation 61.

Lorsque l'utilisateur sélectionne le troisième titre « position GPS » sur la première page de présentation 61 de la carte de visite, il accède à une cinquième page de présentation représentée à la figure 9 et désignée par la référence 81, par activation de la touche virtuelle de validation 68.

Cette cinquième page comporte, d'une part le libellé explicite de la carte de visite, et d'autre part les données de l'attribut de position GPS, comme décrit à la figure 4.

Lorsque les informations définissant l'attribut d'adresse postale sont complètes, le système de navigation du véhicule 30 est capable de calculer automatiquement les données de l'attribut de position GPS, lors de l'affichage de cette cinquième page.

De même que la troisième page de présentation représentée à la figure 7, la cinquième page de présentation comporte des touches virtuelles de guidage 82, de sélection 84 et de manipulation 86 permettant à l'utilisateur d'accéder à des fonctions identiques.

Lorsque l'utilisateur sélectionne le quatrième titre « numéros de téléphone ou fax », sur la première page de présentation 61, de la carte de visite, il accède à une sixième page de présentation, représentée à la figure 10, et désignée par la référence générale 87, par activation de la touche virtuelle de validation 68.

Cette sixième page 87 comporte, d'une part, le libellé explicite de la carte de visite, et d'autre part, au plus cinq numéros de téléphone ou fax, associés à un type, tels que décrits à la figure 4. Elle comporte également une première touche virtuelle d'appel 88 qui permet l'appel automatique d'un numéro de téléphone ou fax sélectionné parmi la liste affichée.

Elle comporte enfin une deuxième touche virtuelle de sélection 90 et une troisième touche virtuelle de manipulation 92, identiques à celles décrites précédemment et permettant d'accéder aux mêmes fonctions.

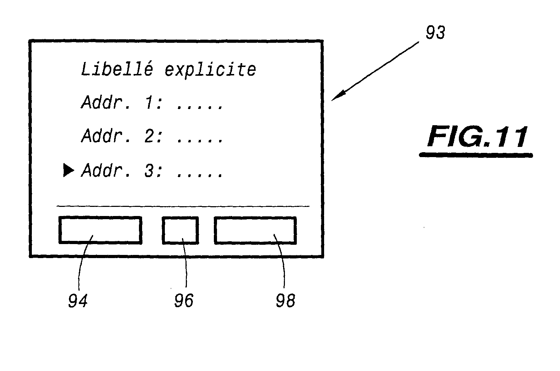

Lorsque l'utilisateur sélectionne le cinquième titre « adresse Email », sur la première page de présentation 61 de la carte de visite, il accède à une septième page de présentation, représentée à la figure 11 et désignée par la référence générale 93, par activation de la touche virtuelle de validation 68.

Cette septième page comporte, d'une part, le libellé explicite de la carte de visite et d'autre part, une liste d'au plus cinq adresses électroniques, chacune étant associée à un type, comme cela est décrit à la figure 4.

De même que la page précédente, cette page comporte des touches virtuelles d'appel 94, de sélection 96, de manipulation 98, permettant d'accéder aux mêmes fonctions que celles décrites précédemment.

Deux cartes de visite sont dédiées, l'une à l'utilisateur pour qu'il puisse entrer ses propres coordonnées et la seconde au constructeur du véhicule.

Cette seconde carte est automatiquement entrée en concession constructeur avec le numéro de téléphone, le nom et l'adresse de la concession correspondante, inscrits sur les pages correspondantes de la carte de visite. Un second numéro de téléphone de type GSM, est ajouté sur cette carte, vers lequel il est possible d'envoyer des messages courts de type SMS de façon classique. Ce second numéro de téléphone correspond à un centre de diagnostic du fonctionnement du véhicule avec lequel le terminal embarqué peut échanger des informations.

Ainsi, lorsque l'utilisateur appelle la concession par sélection du premier numéro de téléphone de la concession, le terminal embarqué 16 génère automatiquement un message court de type SMS vers le second numéro de téléphone.

Ce message court contient des données de diagnostic du véhicule obtenues grâce à la connexion du terminal embarqué 16 avec le calculateur central 40 du véhicule automobile assurant la gestion du fonctionnement de celui-ci. Il centralise par exemple l'état de l'indicateur de maintenance et des dernières alertes véhicule, telles que la température d'eau, d'huile, etc.

Le centre de diagnostic retransmet par exemple au concessionnaire tout le contenu utile du message court reçu du véhicule, en vue d'une analyse de celui-ci.

Lors de l'utilisation courante du système selon l'invention, la gestion des accès se fait de la façon suivante :
- la consultation d'un même répertoire est possible simultanément depuis un terminal d'accès fixe 12 et un terminal d'accès 16 embarqué à bord d'un véhicule automobile avec au plus un accès de type Internet et un accès de type WAP;
- une action de modification n'est pas possible simultanément depuis un accès de type Internet et depuis un accès de type WAP. Lorsqu'une carte de visite est en cours de modification sur le serveur Internet 4, elle n'est accessible qu'en lecture sur le serveur WAP 6 et l'icone 62 est activé, et inversement si la modification est en cours à partir du serveur WAP 6, et l'icone 50 est activé; et
- les actions d'ajout et de suppression de carte de visites ne sont pas possibles simultanément depuis un accès de type Internet et depuis un accès de type WAP.

Cette gestion et ce contrôle sont assurés par le superviseur d'accès 21 associé à la base de données 2.

Il apparaît ainsi que le système d'accès à des informations stockées dans une base de données selon l'invention remédie aux inconvénients des systèmes classiques, en ce qu'il permet un accès simultané à partir d'un terminal d'accès fixe et d'un terminal d'accès embarqué à bord d'un véhicule automobile.

Un autre avantage de ce système réside dans la possibilité de stocker une partie des informations de la base de données dans les moyens de stockage de données 24 du terminal embarqué à bord d'un véhicule automobile.

Un autre avantage encore du système selon l'invention réside dans sa possibilité d'offrir différents services, dont celui décrit, à titre d'exemple, à savoir l'accès à des répertoires électroniques.

On notera enfin que l'invention n'est pas limitée au mode de réalisation décrit.

Notamment, en variante, si le terminal embarqué 16 ne comporte pas de système de navigation 30, la touche virtuelle 74 de guidage, telle que décrite à la figure 7, pourrait permettre d'envoyer une requête de guidage vers le serveur WAP 6.

Celui-ci renvoie alors sous format WML, une feuille de route ou un service de navigation à distance, avec envoi du parcours à suivre sous forme d'une liste de points avec des coordonnées GPS et consignes associées.

## Revendications

1. Système d'accès à des informations stockées dans une base de données (2) à partir d'au moins un terminal d'accès fixe (12) et d'au moins un terminal d'accès (16) embarqué à bord d'un véhicule automobile, **caractérisé en ce que** la base de données comprend deux serveurs de données (4,6) synchronisés et raccordés entre eux par des moyens de mise à jour mutuelle (8), un premier serveur (4) contenant les informations selon un premier format permettant l'échange d'informations via un réseau (10) de type Internet avec le terminal fixe (12) et un second serveur (6) contenant les informations selon un second format permettant l'échange d'informations avec le terminal embarqué (16) à travers un réseau de télécommunication sans fil (18), au moyen d'une passerelle de raccordement (20) de ce second serveur (6) avec le réseau de télécommunication sans fil (18).

2. Système d'accès à des informations stockées dans une base de données selon la revendication 1, **caractérisé en ce que** le premier serveur (4) contient les informations stockées selon le format HTML et le second serveur (6) contient les informations stockées selon le format WML du standard WAP, **en ce que** l'échange d'informations avec le terminal embarqué utilise le standard WAP et **en ce que** le terminal d'accès embarqué (16) comporte un logiciel de navigation WAP.

3. Système d'accès à des informations stockées dans une base de données selon la revendication 1 ou 2, **caractérisé en ce que** le terminal d'accès embarqué (16) comprend des moyens de stockage de données (24) adaptés pour le stockage d'une partie des informations de la base de données (2).

4. Système d'accès à des informations stockées dans une base de données selon l'une des revendications 1 à 3, **caractérisé en ce que** le terminal embarqué (16) comporte un module (28) de positionnement géographique par satellite.

5. Système d'accès à des informations stockées dans une base de données selon l'une des revendications 1 à 4, **caractérisé en ce que** le terminal embarqué (16) comporte un système de navigation (30) du véhicule.

6. Système d'accès à des informations stockées dans une base de données selon l'une des revendications 1 à 5, **caractérisé en ce que** le terminal embarqué (16) comporte des moyens de connexion vers un calculateur central (40) du véhicule.

7. Système d'accès à des informations stockées dans une base de données selon l'une des revendications 1 à 6, **caractérisé en ce que** la base de données (2) comporte au moins un répertoire électronique contenant au moins une carte de visite (44 ; 61) associée à un correspondant.

8. Système d'accès à des informations stockées dans une base de données selon la revendication 7, **caractérisé en ce que** la base de données (2) comporte des moyens de contrôle d'accès (21) adaptés pour autoriser la consultation du répertoire électronique par au plus un accès à partir d'un terminal fixe (12) et un accès à partir d'un terminal embarqué (16).

9. Système d'accès à des informations stockées dans une base de données selon la revendication 8, **caractérisé en ce que** les moyens de contrôle d'accès sont adaptés pour autoriser la création, la modification et/ou la suppression d'un répertoire électronique par au plus un accès à partir d'un terminal fixe ou embarqué.

10. Système d'accès à des informations stockées dans une base de données selon l'une des revendications 7 à 9, **caractérisé en ce que** la carte de visite (44) comporte une zone (48) réservée à l'enregistrement d'une adresse postale et de coordonnées de positionnement géographique par satellite correspondant à cette adresse postale.

11. Système d'accès à des informations stockées dans une base de données selon l'une des revendications 7 à 10, **caractérisé en ce que** la carte de visite comporte des zones réservées à l'enregistrement de numéros de téléphone et/ou de fax, d'adresses électroniques, d'un texte, de types définissant le type de chaque numéro de téléphone.

12. Système d'accès à des informations stockées dans une base de données selon l'une des revendications 7 à 11, **caractérisé en ce qu'**une carte de visite de chaque répertoire est libellée au nom du constructeur du véhicule dans lequel est embarqué le terminal d'accès correspondant (16) et comporte un numéro de téléphone correspondant à un centre de diagnostic du fonctionnement du véhicule, avec lequel le terminal embarqué peut échanger des informations de diagnostic.

13. Système d'accès à des informations stockées dans une base de données selon la revendication 12, **caractérisé en ce que** le numéro de téléphone est du type GSM et les informations de diagnostic se présentent sous la forme de messages courts de type SMS.

14. Système d'accès à des informations stockées dans une base de données selon l'une des revendications 1 à 13, **caractérisé en ce que** le réseau de télécommunication sans fil (18) est du type GSM 900.

15. Système d'accès à des informations stockées dans une base de données selon l'une des revendications 1 à 13, **caractérisé en ce que** le réseau de télécommunication sans fil (18) est du type DCS 1800.

16. Système d'accès à des informations stockées dans une base de données selon l'une des revendications 1 à 13, **caractérisé en ce que** le réseau de télécommunication sans fil (18) est du type GPRS.

17. Système d'accès à des informations stockées dans une base de données selon l'une des revendications 1 à 13, **caractérisé en ce que** le réseau de télécommunication sans fil (18) est du type UMTS.
